# EUROPEAN PATENT SPECIFICATION

(11) **EP 2 798 554 B1**
(45) Date of publication and mention of the grant of the patent: **02.06.2021**
(21) Application number: 12816075.1
(22) Date of filing: 27.12.2012
(51) Int. Cl.: G06F 21/10, G06F 16/176, G06F 16/951

(54) **METHOD AND SYSTEM FOR CONTENT DISTRIBUTION**
VERFAHREN UND SYSTEM ZUR INHALTSVERTEILUNG
PROCÉDÉ ET SYSTÈME DE DISTRIBUTION DU CONTENU

(30) Priority: 29.12.2011 EP 11195996
(43) Date of publication of application: 05.11.2014
(73) Proprietor: Koninklijke KPN N.V., 3072 AP Rotterdam (NL)
(72) Inventor: HAVEKES, Anton, 2662EE Bergschenhoek (NL); PRINS, Martin, NL-2561 EN The Hague (NL); KLOS, Victor, NL-2498 BV The Hague (NL); DOETS, Peter-Jan, NL-2628 TG Delft (NL)
(74) Representative: Wuyts, Koenraad Maria
(86) International application number: PCT/EP2012/076927
(87) International publication number: WO 2013/098308

(56) References cited:
- WO-A1-2006/100587
- WO-A2-03/019334
- US-A1- 2004 158 722
- "THE CRYPTOLOPE LIVEÜ PRODUCT", IBM CRYPTOLOPE LIVE. GENERAL INFORMATION GUIDE, XX, XX, 1 January 1997 (1997-01-01), pages 1-36, XP002908144,
- MARC A KAPLAN: "IBM Cryptolopes, SuperDistribution and Digital Rights Management", INTERNET CITATION, 30 December 1996 (1996-12-30), XP002132994, Retrieved from the Internet: URL:http://www.research.ibm.com/people/k/k aplan/cryptolope-docs/crypap.html [retrieved on 2000-03-14]

## Description

### TECHNICAL FIELD

The invention relates to methods and systems for enabling the control and distribution of content between a plurality of devices.

### BACKGROUND

Generally, users can access multi-media content through two main content distribution models: the broadcasting model and the web model. Each content distribution model has its advantages and disadvantages.

In the broadcasting model, high quality content is efficient distributed to a large number of end users for consumption, especially for live broadcasting events. An example falling under the broadcasting model is television broadcasting. Some downsides to the broadcasting model are that interactivity with the content is minimal, the equipment for consuming and interacting with the content is limited to specialized hardware (e.g., set top boxes) using a narrow application programming interface (API), and usually only a small group of developers are authorized to build applications for the content.

In the web model, content is provided to end users in a flexible manner through a large variety of applications built by an open community of developers. Examples falling under the web model include web-based applications, web-based widgets and web pages. Applications that are within the web model generally run on powerful hardware with a broad range of application environments, e.g., personal computing devices, allowing a wider range of interactive applications to be built and used.

One would appreciate that a hybrid model would be able to leverage advantages from both worlds. The hybrid model would allow for an improved system that can provide rich, interactive applications based on the web model while having access to high quality content in the broadcast model. Furthermore, the interactive applications provided to the user through the web model would be closely coupled with the content being provided through the broadcast model, thereby providing an end user experience that unifies both worlds.

However, building a hybrid system to access the content in the broadcasting model is not trivial. Broadcasters implement content protection schemes, e.g., encryption schemes, to prevent the content in the broadcasting model from being shared with third-party applications. Example content protection schemes include High-bandwidth Digital Content Protection (HDCP) and Common Interface Plus (Cl-Plus). Accordingly, third-party developers providing applications in the web model cannot access the content in the broadcast model because the content is encrypted.

D1 WO03/019334 discloses a secure electronic content system and method. The system includes a controller including an interface component, a host system coupled to the controller, the host system configured to present content under predetermined conditions, the host system operable with a navigation protocol, the host system further including a system manager operable with an associations component configured to be at least partially run by the host system, a translator configured to provide meanings and generate commands within the host system at least a first digital rights management (DRM) component configured to provide encoding and access rules for the content; and a file system component including a file system application programming interface (API) configured to provide a logical interface between a plurality of components.

" "THE CRYPTOLOPE LIVE PRODUCT", IBM CRYPTOLOPE LIVE. GENERAL INFORMATION GUIDE, Version 1, Release 1, 1997, pages 1 - 36, XP002908144" discloses applications and tools that enable to build solutions that define how information can be used, accessed, protected, delivered, exchanged, tracked, sold and fulfilled of the internet as well as over enterprise intranet and extranet.

US 2004/158722 A1 is further prior art.

Therefore, there is a need in the art to alleviate at least some of the problems described above, while still enabling content to be distributed from the broadcasting model to the web model.

### SUMMARY

The present invention is defined by the appended independent claims 1, 10, and 17.

### BRIEF DESCRIPTION OF THE DRAWINGS

In the drawings:
**FIG. 1** shows a system for providing interactivity content on the basis of fingerprints generated with recorded audio from the television;
**FIG. 2** shows a system for providing interactivity content to a hybrid television system;
**FIG. 3** shows an illustrative system for enabling content distribution from a first device to a second device;
**FIG. 4** shows yet another illustrative system for enabling content distribution from a first device to a second device.
**FIG. 5** shows a diagram illustrating methods for enabling content distribution from one device to another device.
**FIG. 6** shows a method diagram for content resolution.

### DETAILED DESCRIPTION OF THE DRAWINGS

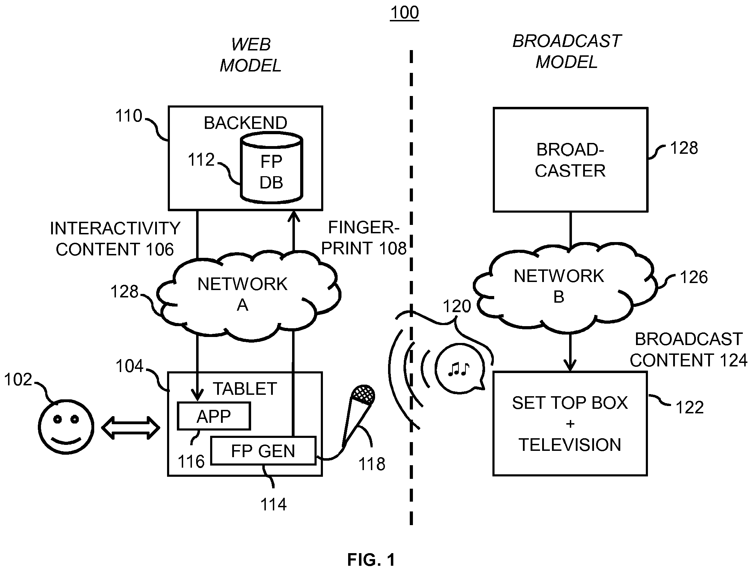

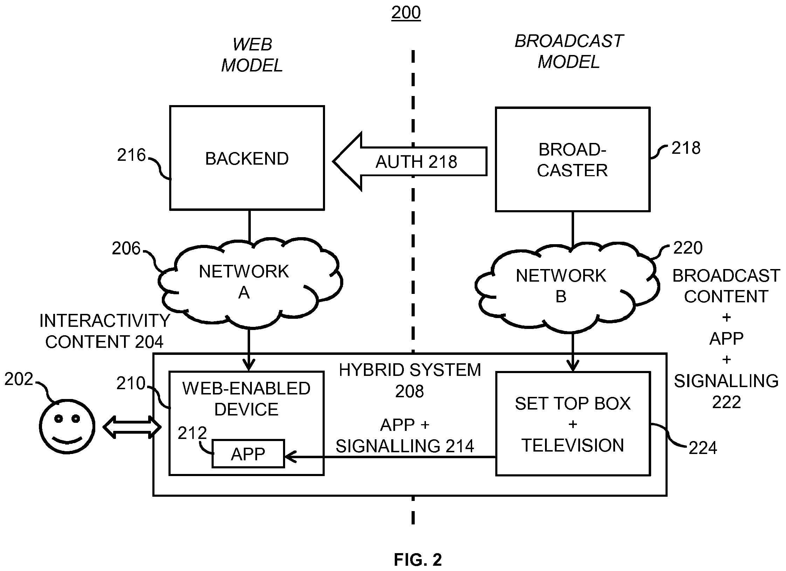

Two systems are discussed below, as **FIG. 1** and **FIG. 2****,** to illustrate certain drawbacks of systems that provide interactive applications to the user while a user is consuming broadcast content, e.g., watching a cooking program on television. Interactive applications generally require content (referred to as "interactivity content" in **FIG. 1** and **FIG. 2**), such as video clips, audio clips, or any other suitable media content. For instance, a cooking recipe application may require interactivity content such as video clips of instructional cooking videos, images of food, etc. The area on left of the dotted line in these two figures represents the world within the web model; the area on the right of the dotted line represents the world within the broadcast model.

**FIG. 1** shows a system for providing interactivity content on the basis of fingerprints generated with recorded audio from the television. In the web model, system **100** includes end user **102** using tablet computer **104** that is communicably connected to back end server **110** over network A **128.** In the broadcast model, the system includes set top box + television system **122** that is communicably connected to broadcaster **128** over network B **126.** The set top box receives broadcast content **124,** such as television programs for various television channels, and the broadcast content is outputted to the television.

The end user using the tablet computer receives sound transmitted by the television **120** by recording an audio signal using microphone **118** of the tablet. Based on the recorded audio signal, the tablet generates a fingerprint using fingerprint generator **114.** The fingerprint uniquely identifies the television channel or television program that is currently consumed on the television. The fingerprint is then transmitted (i.e., fingerprint **108**) to a backend server for processing via network A (i.e., the Internet).

The backend server may be configured to continuously record television channels in real time and calculate a reference fingerprint for each of those channels. The backend server may be configured to store reference fingerprints generated from a collection of television programs. All reference fingerprints are stored in fingerprint database **112.** Upon receiving the fingerprint at the backend server from the tablet computer, the backend server can determine which channel or program the end user is watching on the television by finding a match between the received fingerprint and the reference fingerprints stored in the fingerprint database. The backend can deduce information about the content on the television that is being delivered to the television such that suitable/related interactivity content **106** can be provided to application **116.** For example, the backend server may provide an interactive gaming experience (i.e., the interactivity content) associated with the television program currently being watched by the end-user.

The main limitation of this system is that it merely emulates end user interaction with the content being delivered to the television, when there is no actual access to the content being delivered to the television. Another limitation is that the backend must have the authorization from the broadcaster(s) to generate fingerprints of existing channels or programs and possibly the knowledge of the programming schedule for those television channels. Channel programming may differ from one television provider to another and from one geographical region to another. Accordingly, maintaining such a backend is complex and may not be a scalable solution. Another disadvantage is that the solution is susceptible to (background) noise in the user environment, leading to inaccurate determination or none at all.

**FIG. 2** shows a system for providing interactivity content to a hybrid television system. System **200** enables broadcaster **218** to offer an interactive experience to end user **202** during a broadcast. The system includes hybrid system **208** (e.g., a single receiver box) that comprises web-enabled device **210** and set top box + television system **224.** In the web model, the web-enabled device is communicably connected to backend server **216** over network A **206** (i.e., the Internet). In the broadcast model, the set top box and television system receives broadcast content + application(s) + signalling **222** from broadcaster **218** over Network B **220** (i.e., television broadcast network). Application + signalling **214** is then provided to the web-enabled device to run and control the application.

The broadcaster signals, over Network B (i.e., television broadcast network), to the web-enabled device in the closed hybrid system to run a particular application (e.g., application **212**), while the interactivity content is provided over Network A (i.e., via a broadband Internet connection). Application(s) running on the web-enabled device typically requires a secure certificate and is specific to a certain hybrid system (i.e., model of receiver box), a particular television channel and/or even a television service provider. For instance, if the end user switches to another channel, the application exits automatically. Furthermore, the broadcaster authorizes the backend server (auth arrow **218**) to provide interactivity content **204** to the application running on the web-enabled device to allow the end user to interact with the broadcast content.

This bootstrap system is a closed system where the application being provided to the hybrid system is completely provisioned and controlled by the broadcaster itself. Third-party developers cannot access, modify or even start an application on the web-enabled device (without a secure certificate). Furthermore, the applications run on specific software environments in specialized hardware, i.e., the hybrid system (e.g., a web-enabled receiver box).

To alleviate at least some of the problems discussed in relation to **FIG. 1** and **FIG. 2****,** improved systems and methods are disclosed. The improvement relates to allowing the broadcaster to define permissions for the content such that other applications, e.g., in the web model, may access and use the content in a suitable manner.

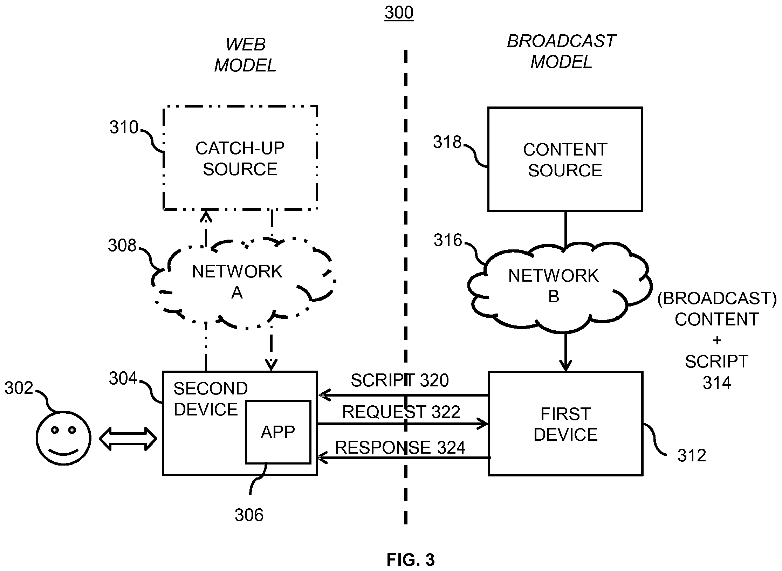

**FIG. 3** shows an illustrative system for enabling content distribution from a first device to a second device. System **300** includes first device **312** communicably connected content source **314.** In some embodiments, a service provider, such as a television service provider, for enabling content distribution may also be involved. For brevity, the service provider is omitted from the figure.

The content source may be a system for broadcasting content (e.g., video, audio, teletext, etc.) and any other suitable data to a plurality of receiving devices (including the first device). The first device may be a set top box, a receiver, or any suitable device or system for receiving content over a broadcast network. The first device may include or is communicably connected to at least one output actuator/device for outputting the content for end user consumption.

Over network B **316** (e.g., a television broadcast network), the first device receives content + computer program script **314** in at least one data stream from the content source. The "+" symbol used herein denotes "and", "with", "in combination with", "together", etc. The content may include at least one of: audio, video, teletext, or any other suitable media content. For instance, the content may include the video and the audio of a television program.

The computer program script may include permission(s) or permission information that enables a content owner and/or a broadcaster to control the access and usage of the content. For instance, the computer program script allows a content owner to define and/or enforce at least one permission to use and/or access the content. Accordingly, the computer program script allows another device, i.e., second device **304,** to appropriately access and use the content, according to, e.g., certain limitations/restrictions and/or supported behaviours as defined by the content owner. The second device may be a personal computer, a laptop, a tablet computer, a handheld computing device, or any other suitable consumer user devices having at least one output actuator for outputting content.

The first device may provide the computer program script or a derivation of the computer program script (computer program script **320**) to the second device over a local network, e.g., via Digital Living Network Alliance (DLNA), Universal Plug and Play (UPnP), Session Announcement Protocol (SAP), Bonjour, Session Initiation Protocol (SIP), etc. In one embodiment, the computer program script or a derivation thereof is forwarded to the second device as they are received from the content source. In some embodiments, the computer program script may be requested by the second device through call-back mechanisms such as Asynchronous JavaScript with XML or JavaScript Object Notation (AJAX/JSON).

Upon receiving the computer program script (or a derivation thereof), the second device may load the computer program script such that the application can use the built-in instruction(s) or function(s) in the computer program script to access and/or use the content on the first device. In some embodiments, the computer program script is interpretable by an application environment of the second device, such that certain functions may be loaded and used by an application running on the second device.

The information in the computer program script advantageously enables a broadcaster to share the content and create interactive services to third-party developers (who may be more capable or suitable in developing a large variety of applications for end users), without losing total control over the access and/or use of the content. Effectively, developers are able to use the web model, with great flexibility, to provide many more applications and/or services for interacting with the content being delivered over the broadcast model.

The computer program script may include at least one of: a code fragment, a snippet of computer program code, executable code, an executable script, and/or human-readable computer program instructions. The computer program script (or "script" for short) may be written in a general-purpose programming language, advantageously interpretable by an application environment (e.g., translated into a lower level instructions) before the instructions in the computer program script are executed on a device. The computer program script may be advantageously written/programmed in a scripting language such that it is easier for a third-party application developer to understand. The computer program script may be written in an embeddable language and/or extension language such that the computer program script may be advantageously embedded or added as an extension to the third-party application for better interoperability. In one embodiment, the computer program script is a code fragment in JavaScript language or a JavaScript file. In yet another embodiment the computer program script is compressed, thereby reducing bandwidth and/or storage requirements.

The computer program script may include at least one of: application programming interface (API), temporal constraints and usage constraints. The API may define at least one function for using or playing back the content, such as play, reorder, shuffle, select snapshot, etc. In particular, the API may include at least one function associated with a permitted or supported playback behaviour of the content. The temporal constraints may include parameters for limiting certain access and/or usage rights associated with time. For instance, the temporal constraints may include at least one of limiting the period of time in which the content may be accessed, limiting the number of times in which the content may be accessed, and defining an expiration date for the content, etc. The usage constraints may include limitations on the manner in which the content can be consumed by the end user. For example, the usage constraints may require an advertisement to be played when the content is played or skipped, disallowing fast forwarding, up to 4 seconds of the content may be played or downloaded, up to three pieces of content may be accessed at a time, etc.

The use of an API in the computer programming script advantageously allows another device to easily call the defined functions in the API to access and use the content under the control of the functions that are predefined by the content owner or broadcaster. Furthermore, the API limits the device to only be able to use the defined functions. For example, a user may not be able to edit the content if an "edit" API function is not provided in the computer program script. Advantageously, the content owner or the broadcaster is provided with the freedom to define which set of functions may be allowed.

Generally, the content owner or broadcaster operating the content source may choose the level of granularity of the computer program script. For instance, the computer program script may include instructions to render a media player with a built-in cryptographic key that is capable of playing a certain video clip. In another instance, the computer program script may include an API that allows the application to inspect on the available content and play the content using a player that is provided by the application.

In brief, several advantages may be achieved by providing a computer program script to the second device, as opposed to the methods described in relation to **FIGS. 1** **and** **2****.** For example, the computer program script may include function(s) or access thereto that a third-party application may execute, e.g., by calling the function through the use of an API. As a result, the function(s) enables a third-party application to access and/or use the content on the first device and/or have parts of a template generated (e.g., a template for defining a visual presentation for and/or interaction with the content). In addition, the computer program script having an API may simplify the programming model, thereby making it easier for third-party application developers to access and/or use the content and to keep the template in accordance with the at least one permissions. Another advantage is that a computer program script may aid in the resolving of the content in situations where a multitude of computer protocols can be used to retrieve the content (e.g. firstly trying a DLNA network setup, then a HTTP Adaptive streaming source, then a progressive download). In some embodiments, the computer program script is interpretable such that various platforms processing the computer program script are able to create a derivation of the computer program script that is more suitable for the platform itself, thus making the computer program script more platform or device independent.

An exemplary part of a computer program script is shown below, where the API of the computer program script provides three functions: "addProgram", "changeProgram" and "verifyPlaylist":

```
 // Load Broadcast functionality
 if (Broadcast in window) {
 var Broadcast = {
 programs: {}, // Note programs could be preloaded as well
 addProgram: function(
   key, title, description, channel, permissions) {
 var program = new Object;
 program.key = key;
 program.title = title;
 program.description = description;
 program.channel = channel;
 program.permissions = permissions;
 // Add to Broadcast administration
 Broadcast.programs[key] = program;
 // Invoke user callback if there is one
 if (undefined !== onBroadcastEvent) {
   onBroadcastEvent(program); }}
   changeProgram: function(
   key, title, description, channel, permissions) {
 var prog = Broadcast.programs[key];
 if (prog) delete Broadcast.programs[key];
 Broadcast.addProgram(
   key, title, description, channel, permissions);
   },
   verifyPlaylist: function(program_key, playlist) {
 var prog = Broadcast.programs[program_key];
 if (prog) {
   return prog.permissions(playlist);
 } else {
   return false; }};}}
```

The second device running application **306,** may generate a template for displaying/presenting content to end user **302.** In some embodiments, the generation of the template is based at least on user input received from a user and/or user interaction with the application. For example, the application may generate a template, such as a webpage for rendering "John's favourite videos", on the basis of input(s) or selection(s) provided by an end user.

The application may be retrieved from a remote source or may be preloaded on the second device. The template defines the manner in which the content is to be presented to the end user. In particular, the template may define the visual presentation for the content. An illustrative example is a widget from a website that allows an end user to define a playlist of media clips, where the template is then a graphical user interface screen or a web page that comprises information defining a visual presentation of the playlist and a particular playlist of an end user (e.g., references to a plurality of contents). In some embodiments, other types of presentations are used besides a visual presentation. For instance, information defining an audio presentation and/or a haptic presentation may be used, depending on the implementation. Generally, the presentation defines the manner in which the content is presented to an end user. In certain embodiments, the presentation defines how the end user may consume and/or interact with the content.

An illustrative example of a template is shown below, as an HyperText Markup Language (HTML)-based webpage:

```
 <!DOCTYPE html>
 <html>
 <head>
 <title>JavaScript Broadcast Events example</title>
 <link rel="stylesheet" type="text/css" href="demo.css" />
 <script src="interaction.js"></script>
 <script type="text/javascript">
 var currentProgram = null;
 var playlist = [
 {'comment': "S04E07", 'start': "0:05:32", 'stop': "0:06:02"},
 {'comment': "S04E07", 'start': "0:09:02", 'stop': "0:09:43"},
 {'comment': "S04E07", 'start': "0:15:23", 'stop': "0:16:01"}]
 function onBroadcastEvent(program) {
 document.getElementByld('announcement').innerHTML =
 program.title
 currentProgram = program.key}
 </script>
 </head>
 <body>
 <header>
 <h1>Broadcast Event Demo</h1>
 </header>
 <div id="item-panel">
 <h3 id="announcement">The Big Bang Theory</h3>
 <div id="fragment1" class="item">Start 0:05:32
 <br>Stop 0:06:02</div>
 <div id="fragment2" class="item">Start 0:09:02
 <br>Stop 0:09:43</div>
 <div id="fragment3" class="item">Start 0:15:23
 <br>Stop 0:16:01</div>
 </div>
 </body>
 </html>
```

In some embodiments, a template may include at least one reference(s) to content. In some embodiments, a template may define at least one element within the template for visually presenting the content (e.g., <div> elements of the HTML code as seen above). In certain embodiments, the template may include parameters for defining the look-and-feel of the template (e.g., using a Cascading-Style Sheet (CSS) file referenced by the HTML code). The template may also contain application code that provides, e.g., drag and drop and/or other types of user interaction functionality (e.g. using external javascript referenced by the HTML code). The application may render the visual presentation using the template and the content referenced therein.

In some embodiments, the template may be generated according to the permission information and/or at least one permissions in the received computer program script. For instance, the permission information and/or at least one permission may be used to verify that the template is in accordance with the permission(s) defined by the content owner. In some embodiments the computer program script includes at least one helper function to help generate at least a part of the template in accordance with the permission information. For instance, a function may be included to enable adding of elements to the template, e.g., adding another content (item) to the template and/or ensuring that the permission information is met when the other content (item) is added.

In some embodiments, the computer program script may include at least one verification function that provides API functions and/or mechanisms to enforce permission(s) defined by the content owner, e.g., to check whether certain playback functions in the template are allowed, etc. The enforcement of permissions ensures that the template would present only content that the application is allowed to access, in a manner that is allowed by the content owner. For instance, the computer program script may include the following:

```
 // Now add the program. The verification function allows any
 // playlist that has three or less items in it.
 Broadcast.addProgram("tbbt", "The Big Bang Theory",
 "Sitcom about four nerds and their neighbor Penny", "Veronica",
 function(fraqments) {return (fragments.length <= 3) ? true : false});
```

The illustrative computer program script includes a verification function to determine whether the playlist has less than or equal to three items; the less than or equal to three item being the permission defined by the illustrative computer program script.

Once a template is generated, the application may transmit a request to access content in the first device. For example, the template may request (request **322**) to access a particular video clip in the first device. If the content is available, then the first device may respond (response **324**) with the requested content. In other words, the first device may transmit the requested content to the second device.

Optionally, the first device checks the received request based on the permission information in the computer program script that the first device had received from the content source. The check performed by the first device enforces the permission(s), e.g., permissions determined from the computer program script and stored on the first device, to ensure that the application has access to the content and that the request is in accordance/compliance with the permission(s). If the request is in accordance with the permissions, then the first device may provide the content to the second device.

In the event that the content requested is not available or not accessible on the first device, the second device may fall back to catch-up source **310,** which is communicably connected to the second device over network A **308** (e.g., a different network from network B). Typically, the catch-up source may have a lower quality version of the requested content than the (higher) quality version in the first device.

The response, i.e., the distribution of the content from the first device to the second device, may be performed using any suitable conventional techniques for delivering content, such as streaming, HTTP LIVE Streaming, MPEG-DASH, progressive download, etc. The content may be delivered from the catch-up source to the second device using a dissimilar or similar technique.

Upon receiving the content, the application may populate the template with the received content, and renders the content and the template to a display of the second device. In some embodiments, the application renders the visual presentation defined by the template using the template and the received content (as referenced in the template) to an output actuator (e.g., a display). For instance, the application may render a media player for the play-back of the content referenced in the template. The end user may then consume and/or interact with the content.

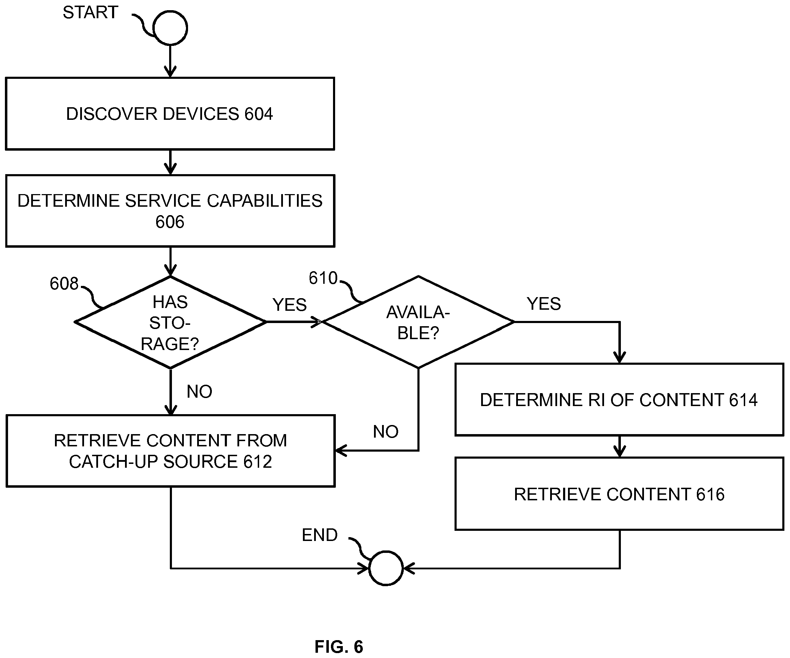

In some embodiments, the computer program script includes content resolution mechanisms or functions to enable the application to resolve the location of the content to be requested and to determine an appropriate resource identifier associated with the content. Accordingly, the application and the template can address or refer to the content without having to specify the exact location of the content itself. The abstraction from the exact location of the content provides the flexibility for a device to determine the most suitable source for the content. Furthermore, when a template or an application is provided from one device to another, the references to the content remains portable because no matter the device, the content resolution mechanisms enables the content to be located. Moreover, when providing one application from one device to another device, content resolution enables one device to refer to the content instead of transmitted the actual content itself. Content resolution enables different templates to be created while the content remains the same. Additionally, by avoiding the copying of the content, copyright and broadcasting rights are observed and resources are conserved. Details relating to the content resolution mechanism is described in further detail in relation to **FIG. 6****.**

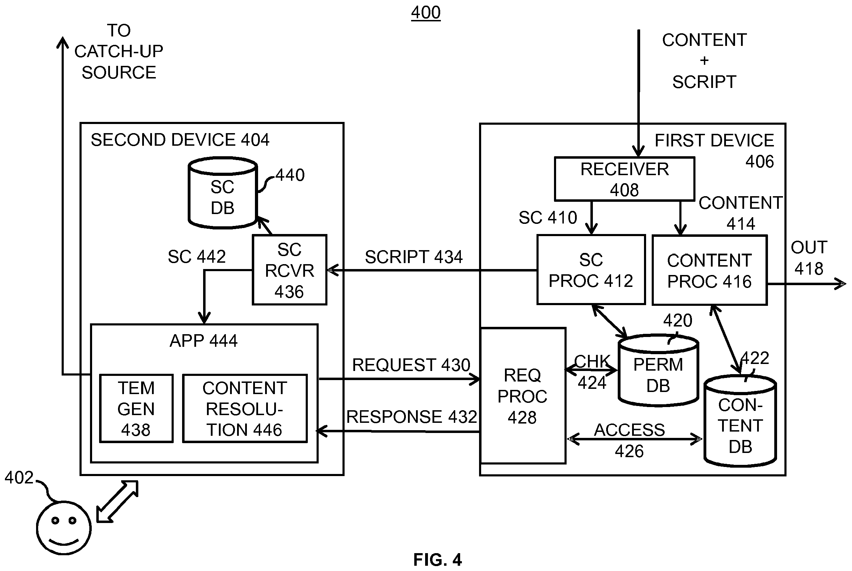

**FIG. 4** shows yet another illustrative system for enabling content distribution from a first device to a second device. System **400** comprises first device **406** communicably connected with second device **404,** e.g., via a home or local network. Receiver component **408** of the first device receives content and computer program script from a content source (maintained by a content owner or broadcaster). The receiver component may be a communication interface or component configured to receive data from a broadcast network. In one embodiment, if the computer program script and the content are transmitted in the same data stream, the computer program script may be separated from the content.

Computer program script **410** may be provided to computer program script processor **412** and content **414** may be provided to content processor **416.** The content, which may be encoded, may be decoded by content processor **416.** The decoded content may then be provided to output **418** to an output device such as a display or a speaker. In some embodiments, the content is stored in content database **422.** The content database may be any suitable storage configured to store and manage content, which may be encoded or decoded, depending on the implementation.

The computer program script may be processed by the computer program script processor. In some embodiments, the computer program script may be forwarded to the second device, bypassing the computer program script processor. In some other embodiments, the computer program script may be translated by the computer program script processor to generate a derivation of the computer program script. Translation (or interpretation) of the computer program script advantageously enables the first device to interpret the computer program script and adapt the computer program script (the information therein) into a localized version of the computer program script. The localized version is then executable by the first device. The first device, using the computer program script processor, effectively adopts the computer program script to match with the capabilities/requirements of the first device, such that, e.g., unsupported API functions in the computer program script may be discarded or disabled. The computer program script processor may process the computer program script to extract and/or apply the permissions within the first device, e.g., ensuring that the content is deleted from the first device when the content expires.

Consider the following exemplary information defined by the computer program script:

| Content access permissions: [*play,pause,snapshot,select,address]* |
|---|
| Supported API calls: |
| *play(item),* |
| *pause(item),* |
| *snapshot(item),* |
| *select(item),* |
| *address(item);* |
| Validity of API calls: |
| PVR storage: *24 hours,* |
| Catch-up source *10 days* |

The first device may interpret the computer program script and determine that the first device, e.g., only locally stores (caches) content for 12 hours (the permission information defines 24 hours). Accordingly, the first device may update/adapt the corresponding permission, e.g., edit the "PVR storage validity value" to 12 hours if the Personal Video Recorder (PVR) is configured to expire content after said duration of time.

Furthermore, the first device may determine that the first device does not support a particular API function call, e.g., does not support the snapshot function. Accordingly, the unsupported function call is removed, e.g., the snapshot function is removed from the "Content access permissions" list.

Additionally, API functions may be translated to locally supported and executable functions, e.g., the first device translates: play(item) -> stb.item.play(), pause(item) -> stb.item.pause(), select(item) -> stb.item.select(), address(item) -> stb.item.getAddress().

The exemplary information defined by the computer program script after translation/interpretation is shown below:

| Content access permissions: *[play,pause,select,address]* |
|---|
| Supported API calls: |
| stb.item.*play())*, |
| *stb.item.pause(),* |
| *stb.item.select(),* |
| *stb.item.getURI();* |
| Validity of API calls: |
| PVR storage: 12 hours, |
| Catch-up source: 10 days |

In either situation, with or without processing, the computer program script or the derivation of the computer program script may be stored in permissions database **430** or any other suitable storage for storing permissions. The computer program script or the derivation thereof is then transmitted to computer program script receiver **436** of the second device. The computer program script receiver may include a receiving component configured to communicate over a home or local network with the first device. Upon receiving the computer program script, the computer program script may be stored in computer program script database **440** or any other suitable storage for storing the computer program script. Computer program script **442** is then provided to application **444.**

The application may load the computer program script into the application. As such, any API functions in the computer program script is made available to the application, such that a template may be generated by template generator **438** according to the computer program script. For instance, a template may be generated and verified using the computer program script, e.g., using API function calls that are included in the computer program script. In some embodiments, the API functions may be interpreted and/or translated to a localized version that is executable or understandable by the application in the second device.

The template may define a visual presentation for presenting content to the end user. In some embodiments, the template includes a reference to content and defines a visual presentation for the content. For instance, a template may be a web page having placeholders for playing a playlist of references to video clips. For instance, the template may include an audio player, a list of references and/or descriptors for a plurality of the end user's favourite audio clips, and function(s) for playing the audio clips.

In some embodiments, content resolution mechanisms may be provided by the content source. In certain embodiments, those content resolution mechanisms may be extended by the application (e.g., the application provided by a third-party developer), or the content resolution mechanisms may be provided by the application itself. Content resolution module **446** may be used to resolve descriptors of content in the template to the at least one resource identifier for retrieving the content.

In some embodiments, the computer program script may provide a content resolution mechanism (executable by the content resolution module) for resolving a descriptor for (or reference to) the content to an exact location of the content. For instance, the computer program script may include instructions to communicate with a remote server (e.g., a media server) to resolve the content, or the content resolution mechanism may be embedded in the computer program script. Details related to the content resolution mechanism are discussed in relation to **FIG. 6****.**

If the content resolution module resolves that the content is located in the first device, then a request for the content (request **430**) may be transmitted to request processor **428.** Optionally, the first device may check whether the application has permission to access the requested content by checking (check **424**) the permissions database. The request is checked against the corresponding permissions associated with the requested content.

If the application is permitted to access the content, then a (localized) function corresponding to the request may be executed to access the content (access **426**) from the content database. The content is then provided in response **432** back to the second device for consumption by the end user. Using the received content, the application may render, e.g., for display, a visual presentation of the content using the template and the received content in the response. The user may then consume and/or interact with the content that is rendered using the template.

If the application is not permitted to access the content, then a notification may be transmitted in the response to indicate that access is denied. Likewise, if the content does not exist on the first device (e.g., not found in the content database), then a (negative) notification may be transmitted in the response to indicate that the content is not found or is not available. The content resolution module may then, in response to the (negative) response, direct the application to retrieve the content from a catch-up source.

Through the advantageous use of the computer program script, the second device may obtain availability information about the content referenced in the template, such that the content may be resolved and retrieved. For instance, the second device may be configured to determine the availability of the content through the use of the computer program script. In one embodiment, the computer program script includes a function to retrieve information from the first device whether the content is accessible and/or available from the first device. Furthermore, the second device is configured to determine from the computer program script what interactions are allowed with the content, e.g., what the valid API function calls are for the content.

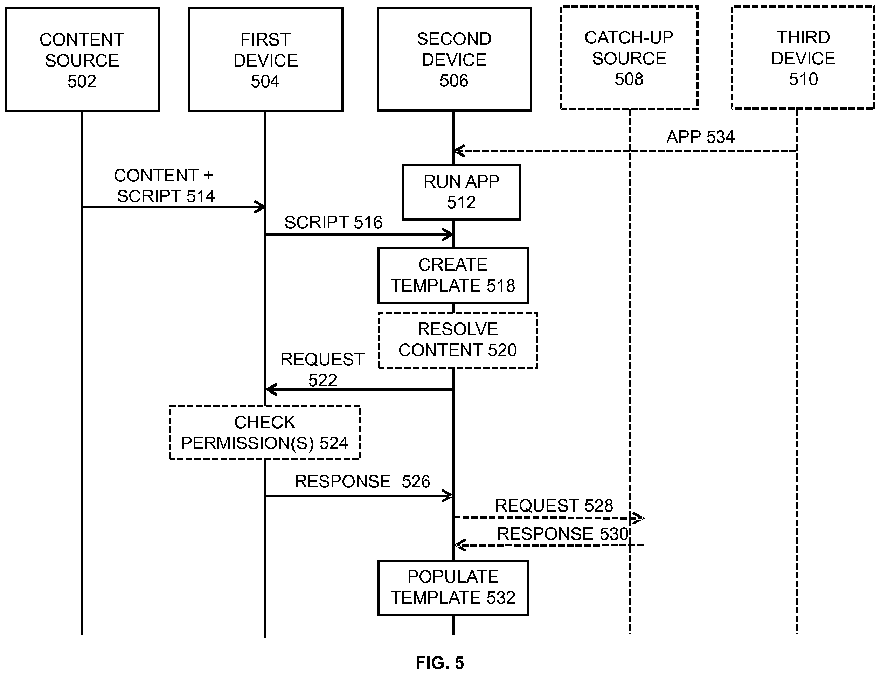

**FIG. 5** shows a diagram illustrating methods for enabling content distribution from one device to another device. The main system comprises content source **502,** first device **504** and second device **506.** The content source provides content + computer program script over a broadcast network ("content + script" **514**) to the first user device, such as a receiver, a set top box, etc. In some embodiments, the computer program script is processed in the first device to generate a derivation of the computer program script. The computer program script and/or the derivation of the computer program script is then transmitted to the second user device ("script" **516**).

The second device, e.g., a personal computer, a tablet, etc., may be running an application ("run app" **512)** such as a web browser for browsing a web page, a widget, a software application, a web-based application, and so on. Several timing situations may be possible. One, the user device may run the application in response to receiving computer program script from the first device. Two, the application may already be running on the second device before the computer program script is received from the first device. Third, the user device may run the application, and transmit a request to the first user device to retrieve the computer program script. In response to the request, the first user device transmits the computer program script.

Based on the computer program script, a template is populated by the application, which enables the second user device to refer to at least one content (item) to be presented and define any associated visual presentation or interaction to be used with the content (item). The template may be generated using the computer program script, which enables the application to generate a template that presents content in the manner prescribed by the broadcaster.

In some embodiments, the received computer program script includes content resolution mechanisms, which are then executed to perform content resolution ("resolve content" **520**). The content resolution mechanisms resolve a reference to the content to the location in which the content is stored by determining a resource identifier associated with the content. Depending on the result of the content resolution mechanism, a request ("request" **522**) may be transmitted to the first user device to retrieve the content referenced in the template, e.g., based on the location and/or the resource identifier determined by the content resolution mechanism.

Optionally, the first user device checks the request based on stored permissions associated with the requested content ("check permission(s)" **524**). On the basis of the results of the permissions check, a response is transmitted ("response" **526**) to indicate the result of the request.

If the request was successful, the response includes the requested content. If the request was not successful, the response may indicate as such, e.g., content was not found, access is denied, etc. In some embodiments, no response may be transmitted if the request was not successful. Accordingly, the second user device may use a time-out mechanism to deduce whether the request was successful or not.

In the event that the request was not successful and the content cannot be retrieved from the first user device, the content resolution mechanism may enable the second user device to communicate with other content sources to retrieve the referenced content in the template. For instance, a request ("request" **528**) may be transmitted to catch-up source **508.** The catch-up source may be a web server configured to provide content as a backup source over the Internet. In a similar fashion, a response ("response" **530**) may be transmitted back to the second user device with the content.

If the catch-up source does not have the content or the access to the content is denied, the response may indicate accordingly. A (negative) response may trigger the second user device to attempt to retrieve the reference content in the template from even a further content source. The negative response may, in some cases, trigger the second user device to display an error message to indicate to the user that the content is not available.

Content resolution mechanisms provide an abstraction between the descriptor of or reference to the content and the means in which the content is stored, as opposed to providing/including the content itself in a template. Accordingly, even if third device **510** provides an application or a template ("app" **534**) to the second device, this second device may still be able to access the content. The second user device may run the application, generate a template, apply the locally retrieved computer program script (as provided by the first user device) such that the permissions prescribed by the broadcaster device is enforced, and perform content resolution to locate the most suitable source for accessing the content. The result enables applications and templates to be portable from one device to another without the need to carry or physically transfer the content that is being addressed with the applications and templates.

Based on the retrieved content in a response (from any suitable content source), the template may be populated by the second device such that the visual presentation defined in the template may be rendered to a display for consumption by and/or interaction with the end user. The end result provides the end user of the second device to interact, through an application built based on the web model, with the content provided over the broadcast model.

**FIG. 6** shows a method diagram for content resolution. The concept of resolution involves translating or looking up a name and/or a descriptor to determine an address. For example, when typing in an Universal Resource Identifier (URI) such as "http://www.abc.com", a web browser resolves this URI by sending a query to a Domain Name System (DNS) to determine the network location of the server hosting the web site ABC.com. The DNS server may the reply with an IP address of that server "134.221.1.64", and the web browser uses this IP address to connect to and retrieve the contents of the website. The concept of resolution is extended and adapted to content resolution, such that a descriptor or a reference may be used to refer to a content (item) without referring to the exact location and/or resource identifier of the content item. In one embodiment, the template includes a reference to and/or a descriptor for a content. Based on the reference/descriptor, content resolution determines a resource identifier, which enables the content to be identified or retrieved on another device. Using the determined resource identifier, a request for the content (that is understandable by the other device) may then be generated.

Through content resolution, a device may be flexible to check for the (most) suitable content source to retrieve the content of interest, instead of being restricted to only retrieving the content from a particular device using a particular resource identifier. Generally, content resolution in the context of this disclosure comprises at least one of: device discovery, service capabilities discovery, content availability discovery, and content URI retrieval.

Content resolution may be executed in a best-effort manner with graceful degradation. Accordingly, content resolution may be performed without input by or interaction with the user and if all fails, the online broadcaster content (e.g., a catch-up source) may be used.

In detail, the exemplary content resolution method begins with the discovery of devices (box **604**). If computer program script has already been received from a particular device, the discovery step may be made optional because the device can assume that particular device is communicably connected to the device.

For example, the device performing content resolution may interrogate over the local network(s) which other devices are connected to the device. For each discovered device, the device may further request information regarding the service capabilities of the discovered device, e.g., the protocols, versions, supported functionality of the device (such as storage, speed), etc. (box **606**). In a situation where computer program script has already been received from a particular device, the computer program script may already include information related to service capabilities. The service capabilities determination step may then be made optional.

For instance, the device may interrogate whether a discovered device has storage for storing content (diamond **608**). In a situation where computer program script has already been received from a particular device indicating that content is stored on that particular device, the storage interrogation step may then be made optional.

If the discovered device has storage, the device further interrogates whether the content of interest is available in the storage (diamond **610**). In some embodiments, the availability of the content may be implemented by a request-response mechanism, as described in relation to **FIGS. 3-5****,** where the second device requests for the content the first device device, and the first device (optionally checking the request against stored permissions) determines whether the content is available and respond accordingly. In certain embodiments, step **608** and **610** may be an implicit part of a query for content (step **614**).

If the discovered device does not have storage for storing content, the device may gracefully fall back to retrieving the content of interest from a catch-up source (box **612**). The graceful fall back mechanism enables the application to determine the appropriate source for accessing the content transparently to the user. For example, if a higher quality version of the content is not available, then a lower quality version of the content is retrieved from a backup source.

If the discovered device has storage and the content is available in the storage, then the device further determines the resource identifier associated with the content (box **614**) by translating the descriptor for the content of interest (as referred to in the template) into a resource identifier that enables the device to request and refer to the content on that discovered device. The determined resource identifier is in a format that the discovered device having storage and the available content may understand.

In one embodiment, the service discovery process will yield a MediaServer as defined by the Universal Plug and Play (UPnP) protocols. The resolve procedure may invoke a search on its built-in ContentDirectory service. This could result in a reply message illustrated in the following example:

```
 <?xml version="1.0" encoding="UTF-8"?>
 <DIDL-Lite
 xmlns:dc="http://purl.org/dc/elements/1.1/"
 xmlns="urn:schemas-upnp-org:metadata-1-0/DIDL-Lite/"
 xmlns:upnp="urn:schemas-upnp-org:metadata-1-0/upnp/"
 xmlns:xsi="http://www.w3.org/2001/XMLSchema-instance"
 xsi:schemaLocation="
 urn:schemas-upnp-org:metadata-1-0/DIDL-Lite/
 http://www.upnp.org/schemas/av/didl-lite.xsd
 urn:schemas-upnp-org:metadata-1-0/upnp/
 http://www.upnp.org/schemas/av/upnp.xsd">
 <item id="12" parentlD="11" restricted="0">
 <dc:title>Have I got news for you - season 21 edition 1</dc:title>
 <dc:creator>STB</dc:creator>
 <upnp:class>
 object.item.videoltem
 </upnp:class>
 <res
 protocolInfo="http:*:video/mpeg:*"
 importUri="http://10.0.0.1/4A09FF78-RACS-8CD8-4F5F-87B3">
 </res>
 </item>
 </DIDL-Lite>
```

Using the field name "importUri", the response may indicate a successful match with a corresponding resource identifier, which may be used to retrieve the content, such as including the corresponding resource identifier in a request for the content.

In some embodiment, content resolution may result in finding or discovering more than one content sources or resource identifiers associated with the content. In those situations, the content resolution may select which one to use based on, e.g., rules for ranking a plurality of content sources or provide a list of preferred content sources (e.g., based on factors such as bandwidth, content quality, access rights, user preferences, etc.).

Using the resource identifier, the content may be retrieved from the discovered device (box **616**). The retrieved content is then used to populate a template such that the visual presentation of the content may be rendered and provided to an end user. In other words, the application may render the visual presentation of the content using the template and the retrieved content as referenced in the template.

Additionally, an illustrative content resolution mechanism is presented as below, which may be executed by the second device at the content resolution step. The functionality below may be part of the computer program script, or the computer program script may include a link to some content resolution function.

```
 // function resolve
 // parameter media is object describing a media fragment
 // returns an URI on success or false otherwise
 function resolve(media) {
 var name = media['name']
 var start = media['start']
 var stop = media['stop']
 var uris = [];
 // start discovery on the local network. The findServices
 // function is offered by the browser itself. Arguments
 // are merely for illustration.
 findServices('*.local', 'media or storage', 1000, function(res) {
 // found service of type
 var type = res.type
 var uri = null
 switch(type) {
 case 'bonjour':
 uri = findOnBonjour(media)
 break;
 case 'upnp':
 uri = findOnUPnPServer(media)
 break;
 case 'cifs':
 uri = findOnCifsServer(media)
 break;
 default: break;
 }
 // Store the result if we have one
 }); if (uri)uris.push(uri)
 if (uris.length > 0) {
 // For now, just use the first one found
 return uris[0]
 } else {
 return Broadcaster.makeDefaultUri(name, start, stop) }}
```

One embodiment of the disclosure may be implemented as a program product/module for use with a computer system and/or a processor/module of a computer system. The program(s) of the program product/module define functions of the embodiments (including the methods described herein) and can be included on a variety of computer-readable non-transitory storage media. The computer-readable storage media can be a non-transitory storage medium . Illustrative computer-readable and/or non-transitory storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., floppy disks within a diskette drive or hard-disk drive, flash memory, or any type of solid-state random-access semiconductor memory) on which alterable information is stored. Moreover, the disclosure is not limited to the embodiments described above, which may be varied within the scope of the accompanying claims without departing from the scope of the disclosure.

It is to be understood that any feature described in relation to any one embodiment may be used alone, or in combination with other features described, and may also be used in combination with one or more features of any other of the embodiments, or any combination of any other of the embodiments.

## Claims

1. A method for enabling content distribution from a first end-user device to a separate second end-user device, the first end-user device configured for receiving the content over a broadcast network, the second end-user device configured for outputting the content to an end-user, the second end-user device communicably connected to the first end-user device, the method comprising the following steps performed by the first end-user device:
receiving the content and a computer program script relating to the content from a content source,
the computer program script for defining or enforcing at least one permission to use and/or access the content and comprising a content resolution function to determine a resource identifier associated with the content;
providing the computer program script and/or a derivation of the computer program script from the first end-user device to the second end-user device;
receiving a request from the second end-user device to access the content; and
providing, to the second end-user device, access to the content according to the at least one permission.

2. The method according to claim 1, wherein providing access to the content comprises:
transmitting, in response to the request, the content from the first end-user device to the second end-user device in accordance with the computer program script.

3. The method according to claim 1 or 2, wherein the computer program script comprises at least one application programming interface function associated with a permitted playback behaviour of the content.

4. The method according to any of the above claims, wherein the computer program script comprises information defining temporal constraint(s) and/or usage constraint(s) limiting the use and/or access of the content.

5. The method according to any of the above claims, further comprising translating, at the first end-user device, the computer program script to generate the derivation of the computer program script.

6. The method according to claim 5, wherein translating the computer program script comprises at least one of:
interpreting the computer program script to instructions executable by the first end-user device;
adapting at least one of the permission(s) to at least one requirement of the first end-user device; and
storing the at least one updated permission in a permission storage of the first end-user device.

7. The method according to any of the above claims, wherein the computer program script is programmed in a scripting language, an embeddable language, and/or an extension language.

8. The method according to any of the above claims, further comprising:
determining whether the request is in accordance with the at least one permission.

9. The method according to any of the above claims, wherein the computer program script comprises a content resolution function to determine a resource identifier associated with the content.

10. A method for enabling content distribution from a first end-user device to a separate second end-user device that is communicably connected to the first end-user device, said first end-user device configured to receive content and a computer program script relating to the content from a content source over a broadcast network, the second end-user device configured for outputting the content to an end-user, said computer program script for defining or enforcing at least one permission to use and/or access the content and comprising a content resolution function to determine a resource identifier associated with the content, the method comprising the following steps performed by the second end-user device
receiving the computer program script and/or a derivation of the computer program script from the first end-user device, wherein the computer program script comprises information for defining at least one permission for accessing the content;
generating a request on the basis of the computer program script and/or the derivation of the computer program script; and
transmitting the request to the first end-user device to access the content.

11. The method according to claim 10, further comprising:
generating a template, said template comprising information defining a visual presentation of the content and a reference to the content;
receiving the content from the first end-user device in response to the request;
rendering, to a display of the second end-user device, the visual presentation using the template and the received content.

12. The method according to claim 10, further comprising:
receiving a template from a third device, said template comprising information defining a visual presentation of the content and a reference to the content;
receiving the content from the first end-user device in response to the request;
rendering, to a display of the second end-user device, the visual presentation using the template and the received content.

13. The method according to claim 11 or 12, wherein the computer program script comprises a verification function to verify that the template is in accordance with the at least one permission.

14. The method according to any of claims 10-13, further comprising:
receiving a response from the first end-user device that the content cannot be accessed and/or is not available on the first end-user device;
upon receiving the response, transmitting another request to another content source to retrieve the content.

15. The method according to claim 10-14, wherein the computer program script comprises a content resolution function to determine a resource identifier associated with the content;
the request is generated on the basis of the resource identifier.

16. The method according to claim 15, wherein the content resolution function, when carried out on the second end-user device, is configured to perform at least one of:
determining at least one connected device communicably connected to the second end-user device;
determining at least one supported capability for any of the at least one connected device;
determining whether the content is available at any of the at least one connected device;
determining the resource identifier of the content for any of the at least one connected device.

17. A computer program product, implemented on computer-readable non-transitory storage medium, the computer program product comprising instructions which, when the program is executed by a computer, cause the computer to carry out the steps of the method according to any one of claims 1-16.

## Patentansprüche

1. Verfahren zum Ermöglichen einer Inhaltsverteilung von einer ersten Endbenutzervorrichtung an eine separate zweite Endbenutzervorrichtung, wobei die erste Endbenutzervorrichtung zum Empfangen des Inhalts über ein Broadcast-Netzwerk ausgelegt ist, die zweite Endbenutzervorrichtung zum Ausgeben des Inhalts an einen Endbenutzer ausgelegt ist, die zweite Endbenutzervorrichtung mit der ersten Endbenutzervorrichtung kommunikationsfähig verbunden ist, wobei das Verfahren die folgenden Schritte umfasst, die von der ersten Endbenutzervorrichtung durchgeführt werden:
Empfangen des Inhalts und eines Computerprogrammskripts, das den Inhalt betrifft, von einer Inhaltsquelle,
wobei das Computerprogrammskript zum Definieren oder Durchsetzen mindestens einer Berechtigung, den Inhalt zu nutzen und/oder darauf zuzugreifen, vorgesehen ist und eine Inhaltsauflösungsfunktion zum Bestimmen einer Ressourcenkennung, die dem Inhalt zugeordnet ist, aufweist
Bereitstellen des Computerprogrammskripts und/oder einer Ableitung des Computerprogrammskripts von der ersten Endbenutzervorrichtung an die zweite Endbenutzervorrichtung;
Empfangen einer Anfrage von der zweiten Endbenutzervorrichtung, auf den Inhalt zuzugreifen; und
Bereitstellen eines Zugriffs auf den Inhalt an die zweite Endbenutzervorrichtung gemäß der mindestens einen Berechtigung.

2. Verfahren nach Anspruch 1, wobei das Bereitstellen eines Zugriffs auf den Inhalt umfasst:
Übertragen des Inhalts von der ersten Endbenutzervorrichtung an die zweite Endbenutzervorrichtung gemäß dem Computerprogrammskript als Reaktion auf die Anfrage.

3. Verfahren nach Anspruch 1 oder 2, wobei das Computerprogrammskript mindestens eine Anwendungsprogrammierschnittstellenfunktion aufweist, die einem genehmigten Wiedergabeverhalten des Inhalts zugeordnet ist.

4. Verfahren nach einem der vorstehenden Ansprüche, wobei das Computerprogrammskript Information aufweist, die zeitliche Beschränkung(en) und/oder Nutzungsbeschränkung(en) definiert, die die Nutzung und/oder den Zugriff auf den Inhalt einschränken.

5. Verfahren nach einem der vorstehenden Ansprüche, das ferner das Übersetzen des Computerprogrammskripts an der ersten Endbenutzervorrichtung zum Erzeugen der Ableitung des Computerprogrammskripts umfasst.

6. Verfahren nach Anspruch 5, wobei das Übersetzen des Computerprogrammskripts mindestens eine der folgenden Aktionen umfasst:
Interpretieren des Computerprogrammskripts in Anweisungen, die durch die erste Endbenutzervorrichtung ausführbar sind;
Anpassen mindestens einer der Berechtigung(en) an mindestens eine Anforderung der ersten Endbenutzervorrichtung; und
Speichern der mindestens einen aktualisierten Berechtigung in einem Berechtigungsspeicher der ersten Endbenutzervorrichtung.

7. Verfahren nach einem der vorstehenden Ansprüche, wobei das Computerprogrammskript in einer Skriptsprache, einer einbettbaren Sprache und/oder einer Erweiterungssprache programmiert ist.

8. Verfahren nach einem der vorstehenden Ansprüche, das ferner umfasst:
Bestimmen, ob die Anfrage in Übereinstimmung mit der mindestens einen Berechtigung ist.

9. Verfahren nach einem der vorstehenden Ansprüche, wobei das Computerprogrammskript eine Inhaltsauflösungsfunktion zum Bestimmen einer Ressourcenkennung, die dem Inhalt zugeordnet ist, aufweist.

10. Verfahren zum Ermöglichen einer Inhaltsverteilung von einer ersten Endbenutzervorrichtung an eine separate zweite Endbenutzervorrichtung, die mit der ersten Endbenutzervorrichtung kommunikationsfähig verbunden ist, wobei die erste Endbenutzervorrichtung zum Empfangen von Inhalt und einem Computerprogrammskript, das den Inhalt betrifft, von einer Inhaltsquelle über ein Broadcast-Netzwerk ausgelegt ist, die zweite Endbenutzervorrichtung zum Ausgeben des Inhalts an einen Endbenutzer ausgelegt ist, das Computerprogrammskript zum Definieren oder Durchsetzen mindestens einer Berechtigung, den Inhalt zu nutzen und/oder darauf zuzugreifen, vorgesehen ist und eine Inhaltsauflösungsfunktion zum Bestimmen einer Ressourcenkennung, die dem Inhalt zugeordnet ist, aufweist, wobei das Verfahren die folgenden Schritte umfasst, die von der zweiten Endbenutzervorrichtung durchgeführt werden:
Empfangen des Computerprogrammskripts und/oder einer Ableitung des Computerprogrammskripts von der ersten Endbenutzervorrichtung, wobei das Computerprogrammskript Information zum Definieren mindestens einer Berechtigung zum Zugreifen auf den Inhalt aufweist;
Erzeugen einer Anfrage auf Grundlage des Computerprogrammskripts und/oder der Ableitung des Computerprogrammskripts; und
Übertragen der Anfrage an die erste Endbenutzervorrichtung, auf den Inhalt zuzugreifen.

11. Verfahren nach Anspruch 10, das ferner umfasst:
Erzeugen einer Vorlage, wobei die Vorlage Information umfasst, die eine visuelle Darstellung des Inhalts und einen Bezug auf den Inhalt definiert;
Empfangen des Inhalts von der ersten Endbenutzervorrichtung als Reaktion auf die Anfrage;
Rendern der visuellen Darstellung auf eine Anzeige der zweiten Endbenutzervorrichtung unter Verwendung der Vorlage und des empfangenen Inhalts.

12. Verfahren nach Anspruch 10, das ferner umfasst:
Empfangen einer Vorlage von einer dritten Vorrichtung, wobei die Vorlage Information umfasst, die eine visuelle Darstellung des Inhalts und einen Bezug auf den Inhalt definiert;
Empfangen des Inhalts von der ersten Endbenutzervorrichtung als Reaktion auf die Anfrage;
Rendern der visuellen Darstellung auf eine Anzeige der zweiten Endbenutzervorrichtung unter Verwendung der Vorlage und des empfangenen Inhalts.

13. Verfahren nach Anspruch 11 oder 12, wobei das Computerprogrammskript eine Verifizierungsfunktion zum Verifizieren aufweist, dass die Vorlage in Übereinstimmung mit der mindestens einen Berechtigung ist.

14. Verfahren nach einem der Ansprüche 10-13, das ferner umfasst:
Empfangen einer Antwort von der ersten Endbenutzervorrichtung, dass auf den Inhalt nicht zugegriffen werden kann und/oder dieser auf der ersten Endbenutzervorrichtung nicht verfügbar ist;
bei einem Empfangen der Antwort Übertragen einer weiteren Anfrage an eine weitere Inhaltsquelle, den Inhalt abzurufen.

15. Verfahren nach den Ansprüchen 10-14, wobei das Computerprogrammskript eine Inhaltsauflösungsfunktion zum Bestimmen einer Ressourcenkennung, die dem Inhalt zugeordnet ist, aufweist;
wobei die Anfrage auf Grundlage der Ressourcenkennung erzeugt wird.

16. Verfahren nach Anspruch 15, wobei die Inhaltsauflösungsfunktion, wenn sie auf der zweiten Endbenutzervorrichtung realisiert wird, dazu ausgelegt ist, mindestens eine der folgenden Aktionen durchzuführen:
Bestimmen mindestens einer verbundenen Vorrichtung, die mit der zweiten Endbenutzervorrichtung kommunikationsfähig verbunden ist;
Bestimmen mindestens einer unterstützten Fähigkeit für jegliche der mindestens einen verbundenen Vorrichtung;
Bestimmen, ob der Inhalt an einer der mindestens einen verbundenen Vorrichtung verfügbar ist;
Bestimmen der Ressourcenkennung des Inhalts für jegliche der mindestens einen verbundenen Vorrichtung.

17. Computerprogrammprodukt, das auf einem computerlesbaren nichtflüchtigen Speichermedium implementiert ist, wobei das Computerprogrammprodukt Anweisungen aufweist, die, wenn das Programm von einem Computer ausgeführt wird, bewirken, dass der Computer die Schritte des Verfahrens nach einem der Ansprüche 1-16 realisiert.

## Revendications

1. Procédé pour permettre la distribution de contenu d'un premier dispositif d'utilisateur final à un deuxième dispositif d'utilisateur final séparé, le premier dispositif d'utilisateur final étant configuré pour recevoir le contenu sur un réseau de diffusion, le deuxième dispositif d'utilisateur final étant configuré pour délivrer en sortie le contenu à un utilisateur final, le deuxième dispositif d'utilisateur final étant connecté de manière communicante au premier dispositif d'utilisateur final, le procédé comprenant les étapes suivantes exécutées par le premier dispositif d'utilisateur final :
la réception du contenu et d'un script de programme informatique relatif au contenu depuis une source de contenu,
le script de programme informatique permettant de définir ou de faire respecter au moins une permission d'utilisation et/ou d'accès au contenu et comprenant une fonction de résolution de contenu pour déterminer un identifiant de ressource associé au contenu ;
la fourniture du script de programme informatique et/ou d'une dérivation du script de programme informatique du premier dispositif d'utilisateur final vers le deuxième dispositif d'utilisateur final ;
la réception d'une demande du deuxième dispositif d'utilisateur final pour accéder au contenu ; et
la fourniture, au deuxième dispositif d'utilisateur final, de l'accès au contenu conformément à l'au moins une permission.

2. Procédé selon la revendication 1, dans lequel la fourniture de l'accès au contenu comprend :
la transmission, en réponse à la demande, du contenu du premier dispositif d'utilisateur final au deuxième dispositif d'utilisateur final conformément au script du programme informatique.

3. Procédé selon la revendication 1 ou la revendication 2, dans lequel le script de programme informatique comprend au moins une fonction d'interface de programmation d'application associée à un comportement de lecture autorisé du contenu.

4. Procédé selon l'une quelconque des revendications ci-dessus, dans lequel le script de programme informatique comprend des informations définissant une ou plusieurs contraintes temporelles et/ou une ou plusieurs contraintes d'utilisation limitant l'utilisation et/ou l'accès au contenu.

5. Procédé selon l'une quelconque des revendications ci-dessus, comprenant en outre la traduction, au niveau du premier dispositif d'utilisateur final, du script de programme informatique pour générer la dérivation du script de programme informatique.

6. Procédé selon la revendication 5, dans lequel la traduction du script de programme informatique comprend au moins l'un des éléments suivants :
l'interprétation du script de programme informatique en instructions exécutables par le premier dispositif d'utilisateur final ;
l'adaptation d'au moins l'une des permissions à au moins une exigence du premier dispositif d'utilisateur final ; et
le stockage de l'au moins une permission mise à jour dans un stockage de permissions du premier dispositif d'utilisateur final.

7. Procédé selon l'une quelconque des revendications ci-dessus, dans lequel le script de programme informatique est programmé dans un langage de script, un langage intégrable et/ou un langage d'extension.

8. Procédé selon l'une quelconque des revendications ci-dessus, comprenant en outre de déterminer si la demande est conforme à l'au moins une permission.

9. Procédé selon l'une quelconque des revendications ci-dessus, dans lequel le script de programme informatique comprend une fonction de résolution de contenu pour déterminer un identifiant de ressource associé au contenu.

10. Procédé pour permettre la distribution de contenu à partir d'un premier dispositif d'utilisateur final vers un deuxième dispositif d'utilisateur final séparé qui est connecté de manière communicante au premier dispositif d'utilisateur final, ledit premier dispositif d'utilisateur final étant configuré pour recevoir du contenu et un script de programme informatique relatif au contenu à partir d'une source de contenu sur un réseau de diffusion, le deuxième dispositif d'utilisateur final étant configuré pour délivrer en sortie le contenu à un utilisateur final, ledit script de programme informatique étant destiné à définir ou à faire respecter au moins une permission d'utilisation et/ou d'accès au contenu et comprenant une fonction de résolution de contenu pour déterminer un identificateur de ressource associé au contenu, le procédé comprenant les étapes suivantes exécutées par le deuxième dispositif d'utilisateur final ;
la réception du script de programme informatique et/ou d'une dérivation du script de programme informatique à partir du premier dispositif d'utilisateur final, où le script de programme informatique comprend des informations pour définir au moins une permission d'accès au contenu ;
la génération d'une demande sur la base du script de programme informatique et/ou de la dérivation du script de programme informatique ; et
la transmission de la demande au premier dispositif d'utilisateur final pour accéder au contenu.

11. Procédé selon la revendication 10, comprenant en outre :
la génération d'un modèle, ledit modèle comprenant des informations définissant une présentation visuelle du contenu et une référence au contenu ;
la réception du contenu à partir du premier dispositif d'utilisateur final en réponse à la demande ;
le rendu, sur un écran du deuxième dispositif d'utilisateur final, de la présentation visuelle en utilisant le modèle et le contenu reçu.

12. Procédé selon la revendication 10, comprenant en outre :
la réception d'un modèle provenant d'un troisième dispositif, ledit modèle comprenant des informations définissant une présentation visuelle du contenu et une référence au contenu ;
la réception du contenu à partir du premier dispositif d'utilisateur final en réponse à la demande ;
le rendu, sur un écran du deuxième dispositif d'utilisateur final, de la présentation visuelle en utilisant le modèle et le contenu reçu.

13. Procédé selon la revendication 11 ou la revendication 12, dans lequel le script de programme informatique comprend une fonction de vérification pour vérifier que le modèle est conforme à l'au moins une permission.

14. Procédé selon l'une quelconque des revendications 10 à 13, comprenant en outre :
la réception d'une réponse du premier dispositif d'utilisateur final indiquant que le contenu n'est pas accessible et/ou n'est pas disponible sur le premier dispositif d'utilisateur final ;
à la réception de la réponse, la transmission d'une autre demande à une autre source de contenu pour récupérer le contenu.

15. Procédé selon les revendications 10 à 14, dans lequel le script de programme informatique comprend une fonction de résolution de contenu pour déterminer un identificateur de ressource associé au contenu ;
la demande est générée sur la base de l'identificateur de ressource.

16. Procédé selon la revendication 15, dans lequel la fonction de résolution de contenu, lorsqu'elle est exécutée sur le deuxième dispositif d'utilisateur final, est configurée pour effectuer au moins l'une des opérations suivantes :
la détermination qu'au moins un dispositif est connecté de manière communicante au deuxième dispositif d'utilisateur final ;
la détermination d'au moins une capacité prise en charge pour l'un quelconque de l'au moins un dispositif connecté ;
la détermination du fait que le contenu est disponible, ou non, sur l'un quelconque de l'au moins un dispositif connecté ;
la détermination de l'identificateur de ressource du contenu pour l'un quelconque de l'au moins un dispositif connecté.

17. Produit programme informatique, mis en œuvre sur un support de stockage non transitoire lisible par ordinateur, le produit programme informatique comprenant des instructions qui, lorsque le programme est exécuté par un ordinateur, amènent l'ordinateur à exécuter les étapes du procédé selon l'une quelconque des revendications 1 à 16.
